# EUROPEAN PATENT APPLICATION

(11) **EP 4 841 763 A1**
(43) Date of publication of application: **18.11.2026**
(21) Application number: 25852097.2
(22) Date of filing: 04.08.2025
(51) Int. Cl.: H01M 50/184, H01M 50/19, H01M 50/583, H01M 50/581, H01M 50/204, H01M 50/249, H01M 50/183, H01M 50/559

(54) **BATTERY CELL AND BATTERY PACK AND VEHICLE COMPRISING SAME**

(30) Priority: 07.08.2024 KR 20240105656; 30.07.2025 KR 20250104255
(71) Applicant: LG Energy Solution, Ltd., Seoul 07335 (KR)
(72) Inventor: KIM, Do-Gyun, Daejeon 34122 (KR); KIM, Seong-Nyeong, Daejeon 34122 (KR); ROH, Sae-Weon, Daejeon 34122 (KR); JUNG, Sang-Suk, Daejeon 34122 (KR); JO, Min-Ki, Daejeon 34122 (KR); HWANGBO, Kwang-Su, Daejeon 34122 (KR)
(74) Representative: Goddar, Heinz J.
(86) International application number: PCT/KR2025/011575
(87) International publication number: WO 2026/034922

(57) **Abstract**

Disclosed are a battery cell, and a battery pack and a vehicle including the same. The battery cell includes an electrode assembly having a structure in which a positive electrode plate, a negative electrode plate, and a separator interposed between the positive and negative electrode plates are wound in one direction; a battery can configured to accommodate the electrode assembly; a cell terminal electrically connected to the positive electrode plate; and a rivet gasket interposed between the cell terminal and the battery can, wherein the rivet gasket has a thickness reduction portion formed therein.

## Description

### TECHNICAL FIELD

This application is based on and claims priority from Korean Patent Application No. 10-2024-0105656, filed on August 7, 2024, and Korean Patent Application No. 10-2025-0104255, filed on July 30, 2025, with the Korean Intellectual Property Office, the disclosure of which is incorporated herein in its entirety by reference.

The present disclosure relates to a battery cell, and a battery pack and vehicle including the same and, more specifically, to a battery cell capable of blocking a current flow in the battery cell in which a thermal event occurs, and a battery pack and a vehicle including the same.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no byproducts from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell is approximately 2.5V to 4.5V.

Therefore, when an output voltage higher than this is required, a battery module or battery pack may be configured by connecting a plurality of battery cells in series. In addition, a battery module or battery pack may be configured by connecting multiple battery cells in parallel depending on the charge/discharge capacity required for the battery pack. Accordingly, the number of battery cells included in the battery module or battery pack may be set in various ways depending on at least one of the required output voltage and charge/discharge capacity.

Secondary battery cells may be classified into cylindrical, prismatic, and pouch-type battery cells. In the case of a cylindrical battery cell, positive and negative electrode plates are wounded with a separator interposed, as an insulator, between them to form a jelly roll-type electrode assembly, and the electrode assembly is then inserted, along with an electrolyte, into a battery can to form a battery. In addition, the cylindrical battery cell may include a current collector used to electrically connect the positive and negative electrode plates, respectively.

In addition, the cylindrical battery cell may include a cell terminal riveted through a through hole formed in a battery can, and a rivet gasket interposed between the cell terminal and the through hole. Here, the rivet gasket is used to electrically insulate the cell terminal of the positive electrode and the battery can of the negative electrode.

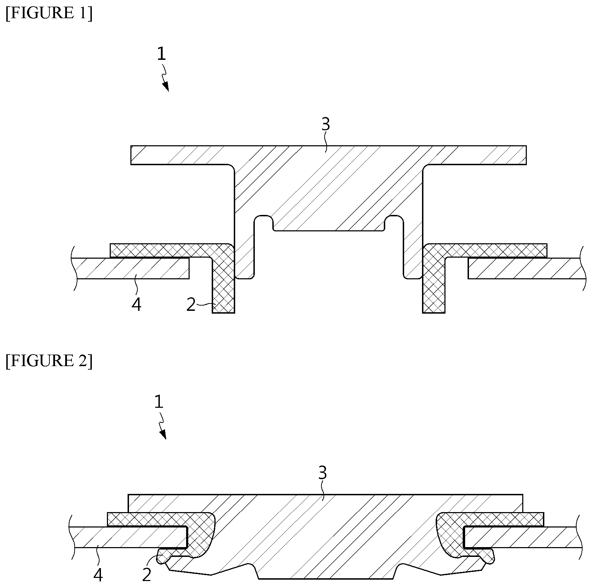

FIG. 1 is a cross-sectional view showing a conventional battery cell before a cell terminal, a rivet gasket, and a battery can are riveted, and FIG. 2 is a cross-sectional view showing a conventional battery cell after the cell terminal, the rivet gasket, and the battery can are riveted.

Referring to FIGS. 1 and 2, in the conventional cylindrical battery cell 1, the rivet gasket 2 is formed flat and thick and there is no change in thickness. Thus, when a thermal event occurs, only a very small portion of the rivet gasket 2 melts.

Also, if the rivet gasket 2 is only partially melted by heat and loses its electrical insulation property, electrical contact occurs between the cell terminal 3 of the positive electrode and the battery can 4 of the negative electrode, causing an internal short circuit current to flow.

However, since only a very small portion of the rivet gasket 2 is melted, the amount of internal short-circuit current flowing at this time is insufficient to melt the fusing portion formed at the bus bar. Here, if the internal short-circuit current continues to flow to other battery cells connected to the battery cell where the thermal event has occurred, a thermal abnormality may occur in the battery cells 1 where the thermal event has not occurred, generating a flame, which may ultimately lead to a chain reaction of fire.

### DISCLOSURE

### Technical Problem

Therefore, the present disclosure is directed to providing a battery cell in which a rivet gasket may be easily melted by heat, and a battery pack and a vehicle including the same.

In addition, the present disclosure is also directed to providing a battery cell that may quickly cut off the current flow of a battery cell in which a thermal event has occurred by causing a cell terminal of a positive electrode and a battery can of a negative electrode to electrically contact through a large area by melting a rivet gasket, thereby causing a high current to flow through a bus bar to rupture a fusing portion formed at a bus bar, and a battery pack and a vehicle including the same.

In addition, the present disclosure is also directed to providing a battery cell that may prevent a chain reaction of fire in other battery cells where a thermal event has not occurred when a thermal event occurs in one battery cell, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell comprising: an electrode assembly having a structure in which a positive electrode plate, a negative electrode plate, and a separator interposed between the positive and negative electrode plates are wound in one direction; a battery can configured to accommodate the electrode assembly; a cell terminal electrically connected to the positive electrode plate; and a rivet gasket interposed between the cell terminal and the battery can, wherein the rivet gasket has a thickness reduction portion formed therein.

In an embodiment, the thickness reduction portion may be formed as a stepped groove portion.

In an embodiment, the thickness reduction portion may be formed on an inner side of a contact surface between the rivet gasket and the cell terminal.

In an embodiment, the rivet gasket may include a first portion in which the thickness reduction portion is formed; and a second portion extending from the first portion.

In an embodiment, the first portion and the second portion may be made of different materials.

In an embodiment, the first portion may be made of a material with a higher thermal conductivity than the second portion.

In an embodiment, the first portion may be coated with a material having a heat transfer property.

In an embodiment, the first portion may be made of a material with a lower melting point than the second portion.

In an embodiment, when a thermal event occurs, the first portion may melt before the second portion, inducing an electrical contact between the cell terminal and the battery can.

In an embodiment, a stepped protrusion may be formed at the cell terminal, and the stepped protrusion may be coupled to the stepped groove portion.

In an embodiment, the stepped protrusion may be made of a material having a heat transfer property.

In an embodiment, the stepped protrusion may be coated with a material having a heat transfer property.

In an embodiment, a plurality of microgrooves may be formed in the stepped groove portion.

In another aspect of the present disclosure, there is provided a battery pack including at least one battery cell described above, and a vehicle including at least one battery cell described above.

### Advantageous Effects

The embodiments of the present disclosure have the effect that the rivet gasket may be easily melted by heat.

In addition, the embodiments of the present disclosure have the effect of quickly cutting off the current flow of the battery cell in which a thermal event has occurred by causing the cell terminal of the positive electrode and the battery can of the negative electrode to electrically contact through a large area by melting the rivet gasket, thereby causing a high current to flow through the bus bar to rupture the fusing portion formed at the bus bar.

In addition, the embodiments of the present disclosure have the effect of preventing chain fires in other battery cells where no thermal event has occurred when a thermal event occurs in one battery cell.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing a conventional battery cell before a cell terminal, a rivet gasket, and a battery can are riveted.
FIG. 2 is a cross-sectional view showing a conventional battery cell after the cell terminal, the rivet gasket, and the battery can are riveted.
FIG. 3 is a cross-sectional view showing a battery cell according to an embodiment of the present disclosure.
FIG. 4 is a cross-sectional view showing a battery cell according to a modified embodiment of FIG. 3.
FIG. 5 is a perspective cross-sectional view showing a cell terminal in a battery cell according to an embodiment of the present disclosure.
FIG. 6 is a perspective view showing a cross-section of a rivet gasket in the battery cell according to an embodiment of the present disclosure.
FIG. 7 is a cross-sectional view showing a battery cell according to an embodiment of the present disclosure, before the cell terminal, the rivet gasket, and the battery can are riveted.
FIG. 8 is an enlarged view of a portion A of FIG. 7.
FIG. 9 is a cross-sectional view showing a battery cell according to an embodiment of the present disclosure, after the cell terminal, the rivet gasket, and the battery can are riveted.
FIG. 10 is an enlarged view of a portion B of FIG. 9.
FIG. 11 is a perspective cross-sectional view showing a rivet gasket according to a modified embodiment for FIG. 6.
FIG. 12 is a schematic diagram showing the configuration of a battery pack including the battery cell according to each embodiment of the present disclosure.
FIG. 13 is a diagram for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the sizes of respective elements or specific parts of each element are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this specification, when it is stated that a certain component is "coupled to" or "coupled to" another component, it should be understood that the component may be directly joined or coupled to the other component, or that they may be indirectly joined or coupled via a connecting member provided between them.

Meanwhile, the description of a common component in any one embodiment of the present disclosure may also be applicable to that in other embodiments. For example, the configurations of the second embodiment, which are common to those described in the first embodiment, may refer to the foregoing description of the first embodiment, and the common configurations may also be applicable to the second embodiment. In addition, the description of the second embodiment, which is applicable to the first embodiment, may also be applied to the first embodiment. The same applies to the other embodiments as well.

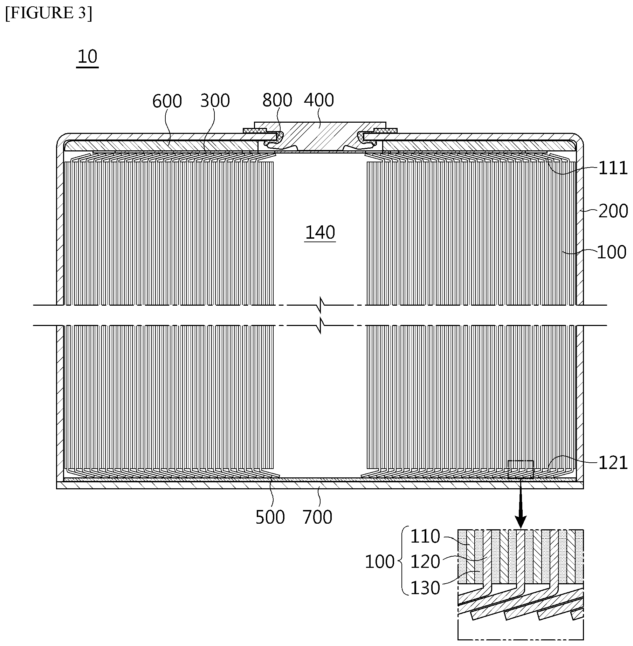

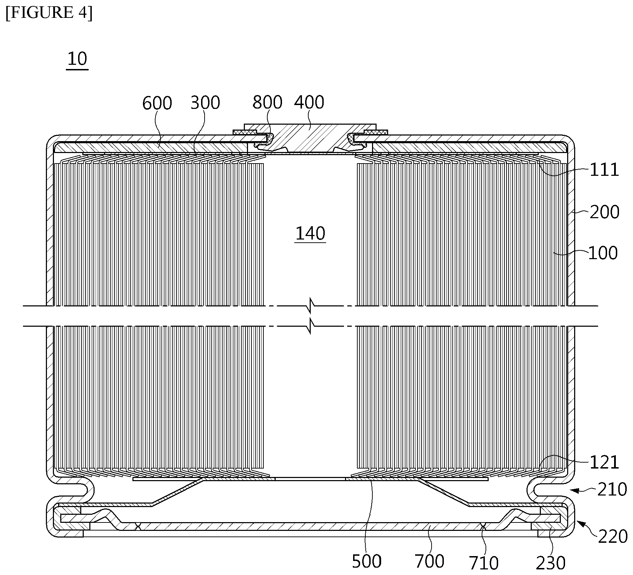

FIG. 3 is a cross-sectional view showing a battery cell according to an embodiment of the present disclosure, and FIG. 4 is a cross-sectional view showing a battery cell according to a modified embodiment of FIG. 3.

Referring to FIGS. 3 and 4, the battery cell 10 according to an embodiment of the present disclosure may include a cap 700 coupled to the battery can 200 to seal an open portion formed in the battery can 200. In addition, depending on the coupling method of the cap 700, the battery cell 10 may be classified into a type in which the crimping portion 220 and the beading portion 210 are not formed in the battery can 200 (see FIG. 3), and a type in which the crimping portion 220 and the beading portion 210 are formed in the battery can 200 (see FIG. 4).

Referring to FIG. 3, if the beading portion 210 and the crimping portion 220 are not formed in the battery can 200, the cap 700 may be coupled by direct welding to the battery can 200 through various welding methods, for example, seam welding.

If welding the battery can 200 and the cap 700 of the battery cell 10 by the seam welding method, the cap 700 may be coupled by welding (e.g., horizontal welding) to the side surface of the battery can 200. That is, the cap 700 may be coupled so as to be in contact with the inner side of the side surface of the open portion of the battery can 200.

Alternatively, although not shown in the drawings, the cap 700 may be coupled to the upper surface of the battery can 200 by welding (e.g., vertical welding). That is, the cap 700 may be mounted and welded to the upper side of the open portion of the battery can 200.

The cap 700 may have various shapes, for example, a plate shape, but the shape of the cap 700 is not limited thereto.

The welding method of the cap 700 and the battery can 200 may vary, and for example, the cap 700 may be coupled to the battery can 200 by butt welding, but is not limited thereto.

The cap 700 and the battery can 200 may be coupled by a coupling method other than welding, and the coupling method is not limited thereto. By coupling the cap 700 and the battery can 200, the sealing property of the battery cell 10 may be guaranteed.

The cap 700 may be made of a metal material. Therefore, the cap 700 may have conductivity. For example, the cap 700 may contain an aluminum material. The cap 700 may be electrically connected to the battery can 200. Meanwhile, since the battery can 200 is also made of a conductive metal, the cap 700 coupled to the battery can 200 may also be configured to have the same polarity as the battery can 200.

In this way, in the case of the seam welding method in which the cap 700 is directly welded to the battery can 200, the fixing structure is simple, so that the volume of the electrode assembly 100 that may be accommodated inside the battery can 200 may be secured more, and accordingly, it is more advantageous in securing electric capacity compared to the same volume of the battery can 200, so there is an effect of improving the energy density.

In addition, referring to FIG. 4, in the case of a type in which the crimping portion 220 and the beading portion 210 are formed on the battery can 200, the crimping portion 220 is formed on the battery can 200 to fix the cap 700. Also, the beading portion 210 is formed by press-fitting the periphery of the outer circumference of the battery can 200 inward to support the electrode assembly 100 so that the electrode assembly 100 does not come out of the battery can 200.

The cap 700 may be made of, for example, a metal material to ensure rigidity. In addition, the cap 700 may be separated from the electrode assembly 100 and provided as non-polar. In other words, the cap 700 may not have polarity even if it is made of a conductive metal material.

The cap 700 not having polarity means that the cap 700 is electrically isolated from the battery can 200 and the cell terminal 400. Thus, the cap 700 may not polarity, and its material does not necessarily have to be a conductive metal.

The cap 700 may be mounted on and supported by the beading portion 210 formed on the battery can 200. In addition, the cap 700 is fixed by the crimping portion 220. A sealing gasket 230 may be interposed between the cap 700 and the crimping portion 220 of the battery can 200 to ensure airtightness of the battery can 200. That is, the sealing gasket 230 may be arranged to be interposed between the edge of the cap 700 and the open portion of the battery can 200. Here, the reference sign 710 in FIG. 4 indicates a vent notch.

Hereinafter, for convenience of explanation, the battery cell 10 according to an embodiment of the present disclosure is described based on an example (FIG. 3) in which the cap 700 is directly welded to the battery can 200 by a seam welding method, but the scope of the present disclosure is not limited thereto.

Referring to FIG. 3, the battery cell 10 according to an embodiment of the present disclosure includes an electrode assembly 100, a battery can 200, a cell terminal 400, and a rivet gasket 800.

Referring to FIG. 3, the electrode assembly 100 has a structure in which a positive electrode plate 110, a negative electrode plate 120, and a separator 130 interposed between the positive electrode plate 110 and the negative electrode plate 120 are wound in one direction. In addition, a central hole 140 is formed at the center of the electrode assembly 100, and the electrode assembly 100 may be formed in a jelly-roll type.

For example, the electrode assembly 100 may be manufactured by winding a stack formed by sequentially stacking a negative electrode plate 120, a separator 130, a positive electrode plate 110, and a separator 130 at least once. Here, the positive electrode plate 110 and the negative electrode plate 120 may be formed in a sheet shape.

That is, the electrode assembly 100 applied to this embodiment may be a winding-type electrode assembly 100. In this case, an additional separator may be provided on the outer surface of the electrode assembly 100 for insulation from the battery can 200. That is, the electrode assembly 100 may have any winding structure well known in the relate art.

A positive electrode active material is applied to one or both sides of the positive electrode plate 110, and a first uncoated portion 111 on which the positive electrode active material is not applied may be formed at an end of the positive electrode plate 110. Here, the positive electrode active material coated on the positive electrode plate 110 may use any active material known in the art without limitation.

As described above, a positive electrode plate 110 having a first uncoated portion 111 formed thereon may be provided in the battery cell 10, but the battery cell 10 according to an embodiment of the present disclosure also includes an embodiment regarding a positive electrode plate 110 in which a first uncoated portion 111 is not formed. However, for convenience of explanation, the following description will focus on a case in which the first uncoated portion 111 is formed on the positive electrode plate 110.

A negative electrode active material is applied to one or both sides of the negative electrode plate 120, and a second uncoated portion 121 on which the negative electrode active material is not applied may be formed at an end of the negative electrode plate 120. Here, the negative electrode active material coated on the negative electrode plate 120 may use any negative electrode active material known in the art without limitation.

As described above, a negative electrode plate 120 having a second uncoated portion 121 formed thereon may be provided in the battery cell 10, but the battery cell 10 according to an embodiment of the present disclosure includes an embodiment regarding a negative electrode plate 120 in which a second uncoated portion 121 is not formed. However, for convenience of explanation, the following description will focus on a case in which the second uncoated portion 121 is formed on the negative electrode plate 120.

At least one of the positive electrode plate 110 and the negative electrode plate 120 may include an uncoated portion, in which an active material is not coated, at the long side end in the winding direction. The first uncoated portion 111 and the second uncoated portion 121 may be exposed to the outside of the separator 130 while forming a plurality of winding turns based on the center of the electrode assembly 100, and may be used as electrode tabs by themselves. In addition, the first uncoated portion 111 and the second uncoated portion 121 may be configured to face in opposite directions.

In one embodiment, the first uncoated portion 111 and the second uncoated portion 121 may have notches at predetermined intervals to form flag-shaped notching tabs. In the jelly-roll type electrode assembly 100, the notching tabs may be bent in a radial direction and flattened. For example, the notching tabs may be bent inward or outward in the radial direction.

In addition, the notching tabs may be bent one by one during the process of forming the jelly-roll type electrode assembly 100 by winding the stack. Alternatively, the notching tabs may be bent all at once after forming the jelly-roll type electrode assembly 100 by winding the stack.

The notching tabs of the first uncoated portion 111 and the notching tabs of the second uncoated portion 121, which are folded and overlapped in the radial direction, may provide a plane that is substantially perpendicular to the axial direction at both axial ends of the electrode assembly 100, respectively.

In addition, the separator 130 may be formed of a porous polymer film made of, for example, a polyolefin-based polymer such as an ethylene homopolymer, a propylene homopolymer, an ethylene-butene copolymer, an ethylene-hexene copolymer, or an ethylene-methacrylate copolymer, in a single layer or multiple layers.

As another example, the separator 130 may be formed of a conventional porous nonwoven fabric, for example, a nonwoven fabric made of high-melting-point glass fibers, polyethylene terephthalate fibers, or the like.

At least one surface of the separator 130 may include a coating layer of inorganic particles. In addition, the separator 130 itself may be formed of a coating layer of inorganic particles. The particles constituting the coating layer may have a structure in which they are bound with a binder to form an interstitial volume between adjacent particles.

In addition, the central hole 140 of the electrode assembly 100 may be used for welding the cell terminal 400 (positive electrode terminal) and the positive electrode current collector plate 300. That is, the electrode assembly 100 may be configured to weld the cell terminal 400 and the positive electrode current collector plate 300 by irradiating a laser beam through the central hole 140 of the electrode assembly 100.

Referring to FIG. 3, the electrode assembly 100 is stored in the battery can 200. For example, the battery can 200 may be formed in a cylindrical shape so that the electrode assembly 100 is stored inside the battery can 200, and electrically connected to the negative electrode plate 120 of the electrode assembly 100. As a result, the battery can 200 may have the same polarity as the negative electrode plate 120, i.e., the negative polarity.

Here, the diameter of the battery can 200 is larger than the diameter of the electrode assembly 100.

If the size of the electrode assembly 100 is increased in a state where the size of the battery can 200 is determined according to the standard, the total capacity of the battery cell 10 increases, but the gap between the battery can 200 and the electrode assembly 100 decreases, so it is necessary to appropriately adjust the size of the insulator 700 interposed between the battery can 200 and the positive electrode current collector plate 300.

The battery can 200 may have a closed portion and an open portion, which are positioned to face each other. The electrode assembly 100 is received through the open portion formed in the battery can 200, and electrolyte is also injected through the open portion formed in the battery can 200.

That is, the battery can 200 is a roughly cylindrical container with an open portion formed therein, and may be made of a conductive material, such as metal. The battery can 200 may be made of a conductive metal, such as aluminum, steel, or stainless steel, but is not limited thereto.

In addition, the battery can 200 may have a closed portion. The closed portion may be formed partially on the opposite side of the open portion. A through hole may be formed in the closed portion. In addition, as shown in FIG. 3, the cell terminal 400 is coupled to the through hole, and the cell terminal 400 may be electrically connected to the positive electrode current collector plate 300 via the through hole. In addition, referring to FIG. 3, an insulator 600 according to each embodiment of the present disclosure, explained later, may be interposed between the battery can 200 and the positive electrode current collector plate 300. The same may be applied to FIG. 2. The same applies to FIG. 4

The battery can 200 may include a bottom portion and a sidewall portion, and the bottom portion and the sidewall portion of the battery can 200 may be manufactured by forming a metal sheet having a nickel plated on the steel surface using a deep drawing process, and trimming the front end of the sidewall portion with a punch while holding it with a blank holder. However, the material and manufacturing method of the battery can 200 are not limited thereto.

Referring to FIG. 3, the battery cell 10 may include a positive electrode current collector plate 300. The positive electrode current collector plate 300 is electrically connected to the positive electrode plate 110. For example, referring to FIG. 3, the positive electrode current collector plate 300 is connected to the positive electrode plate 110 of the electrode assembly 100.

The positive electrode current collector plate 300 is made of a conductive metal material and is connected to the first uncoated portion 111 of the electrode assembly 100. The positive electrode current collector plate 300 may be coupled to a coupling surface formed by bending the end of the first uncoated portion 111 in a direction parallel to the positive electrode current collector plate 300. The bending direction of the first uncoated portion 111 may, for example, be a direction toward the central winding portion of the electrode assembly 100.

When the first uncoated portion 111 is bent as described above, the space occupied by the first uncoated portion 111 may be reduced, thereby improving energy density. In addition, the bonding area between the first uncoated portion 111 and the positive electrode current collector plate 300 may increase, leading to improved bonding strength and reduced resistance.

The cell terminal 400 is made of a conductive metal material and is coupled to a through hole formed in the closed portion of the battery can 200 so that it may be electrically connected to the positive electrode current collector plate 300 via the through hole. In addition, the cell terminal 400 is electrically connected to the positive electrode plate 110 of the electrode assembly 100 through the positive electrode current collector plate 300, thereby having the positive polarity.

That is, the cell terminal 400 may function as a positive electrode terminal. In addition, the battery can 200 may be electrically connected to the negative electrode plate 120 of the electrode assembly 100 as described above, thereby having the negative polarity.

Referring to FIG. 3, the battery cell 10 may include a negative electrode current collector plate 500. The negative electrode current collector plate 500 is electrically connected to the negative electrode plate 120. The negative electrode current collector plate 500 may be connected to the second uncoated portion 121 of the electrode assembly 100. Here, the negative electrode current collector plate 500 is made of a conductive metal material such as aluminum, steel, copper, or nickel, and may be electrically connected to the second uncoated portion 121 of the negative electrode plate 120.

The negative electrode current collector plate 500 may be electrically connected to the battery can 200. As a result, the battery can 200 may have the negative polarity. In addition, at least a portion of the edge of the negative electrode current collector plate 500 may be directly welded to the inner wall surface of the battery can 200, but is not limited thereto.

Referring to FIG. 3, the battery cell 10 may include an insulator 600. The insulator 600 is interposed between the battery can 200 and the positive electrode current collector plate 300 to prevent contact between the positive electrode of the electrode assembly 100 and the negative electrode of the battery can 200, thereby blocking electrical connection. Therefore, the insulator 600 may be made of a material having electrical insulation performance. The insulator 600 may have a center opening formed in the central portion, and the cell terminal 400 may be electrically connected to the positive electrode current collector plate 300 through the center opening formed in the insulator 600.

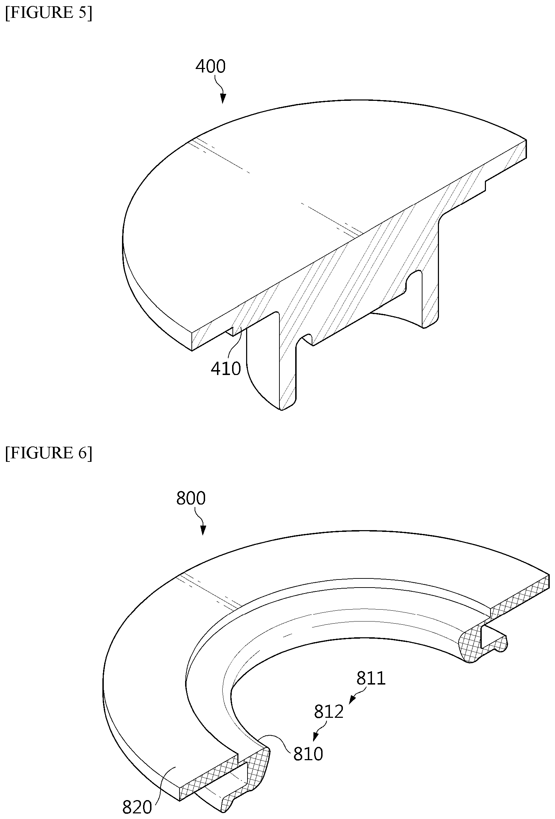

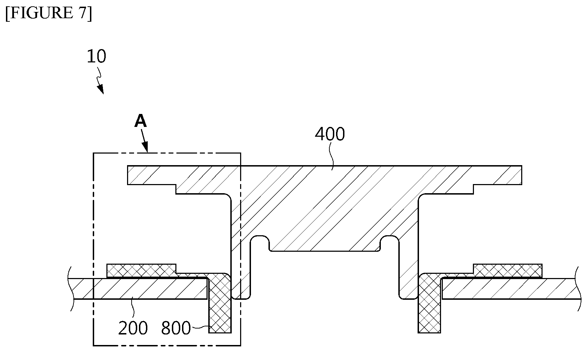

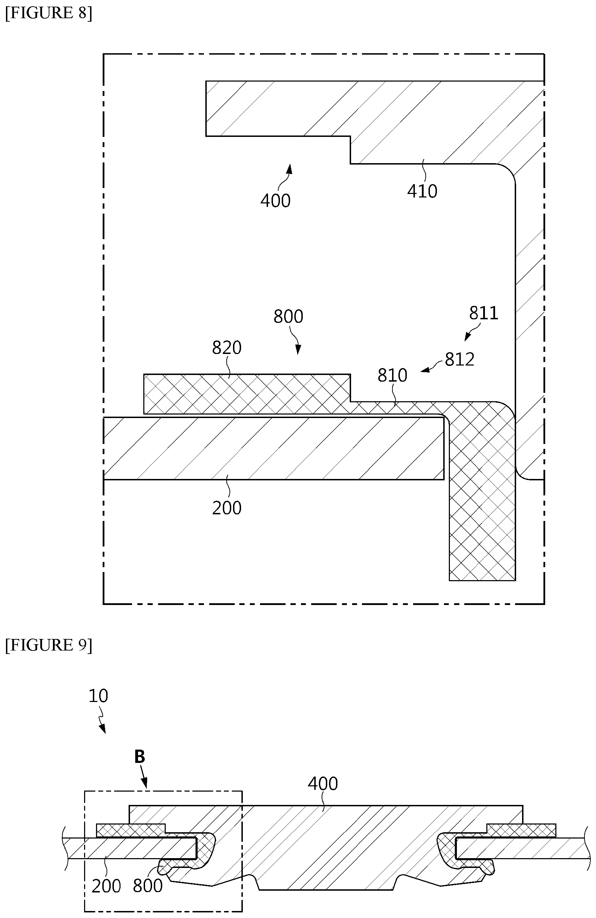

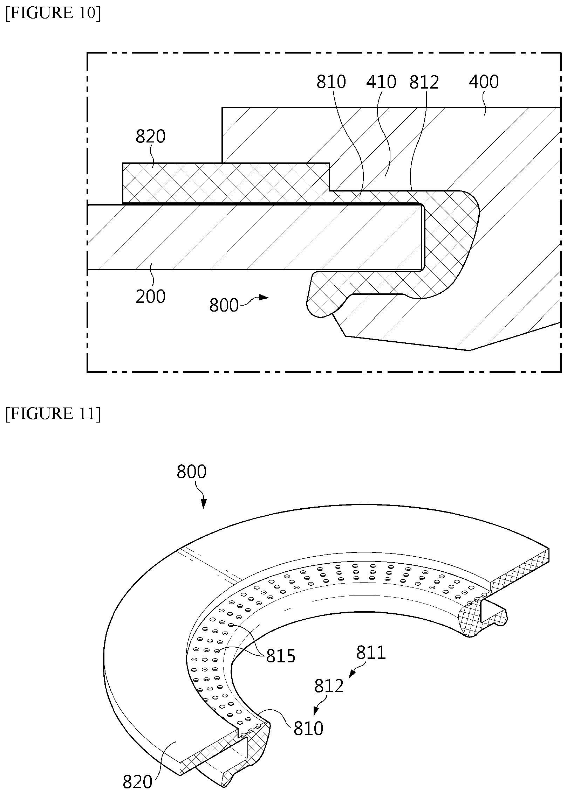

FIG. 5 is a perspective cross-sectional view showing a cell terminal in a battery cell according to an embodiment of the present disclosure, FIG. 6 is a perspective view showing a cross-section of a rivet gasket in the battery cell according to an embodiment of the present disclosure, FIG. 7 is a cross-sectional view showing a battery cell according to an embodiment of the present disclosure, before the cell terminal, the rivet gasket, and the battery can are riveted, FIG. 8 is an enlarged view of a portion A of FIG. 7, FIG. 9 is a cross-sectional view showing a battery cell according to an embodiment of the present disclosure, after the cell terminal, the rivet gasket, and the battery can are riveted, and FIG. 10 is an enlarged view of a portion B of FIG. 9.

Referring to FIGS. 5 to 10, a rivet gasket 800 is interposed between the cell terminal 400 and the battery can 200. The rivet gasket 800 is an electrical insulator that prevents the cell terminal 400 of the positive electrode and the battery can 200 of the negative electrode from contacting each other.

Referring to FIGS. 7 and 8, a thickness reduction portion 811 may be formed in the rivet gasket 800. The thickness reduction portion 811 may be configured in various ways, and may be formed, for example, as a stepped groove portion 812. If the thickness reduction portion 811 is formed as a stepped groove portion 812, there is an effect of improving the sealing characteristics by engaging with the stepped protrusion 410 formed on the cell terminal 400, explained later.

Here, the rivet gasket 800 is arranged to surround a portion of the battery can 200, and the stepped groove portion 812 may be formed in an adjacent area of the battery can 200.

The thickness reduction portion 811 may be formed at various locations of the rivet gasket 800. If the thickness reduction portion 811 is formed as a stepped groove portion 812, the stepped groove portion 812 may be formed, for example, on the inner side of the contact surface between the rivet gasket 800 and the cell terminal 400.

Here, the rivet gasket 800 may be made of various materials, for example, at least one of polypropylene, polybutylene terephthalate, and polyfluoroethylene, which are electrically insulating polymer resins. However, the material of the rivet gasket 800 is not limited thereto.

Referring to FIGS. 7 and 8, the rivet gasket 800 may include a first portion 810 and a second portion 820. Here, the thickness reduction portion 811 may be formed in the first portion 810. That is, the rivet gasket 800 may have a stepped groove portion 812 formed in the first portion 810. In addition, the second portion 820 may extend from the first portion 810.

Here, the first portion 810 and the second portion 820 of the rivet gasket 800 may be made of different materials. For example, the first portion 810 may be made of a material having a higher thermal conductivity than the second portion 820, and when a thermal event occurs in the battery cell 10, the heat generated by the thermal event is transferred more quickly through the first portion 810, and thus the first portion 810 may be relatively easily melted.

In addition, if the first portion 810 is melted, the cell terminal 400 of the positive electrode and the battery can 200 of the negative electrode make electrical contact over a large area, and thus a high current flows through the bus bar. The high current flowing through the bus bar in this way may quickly cut off the current flow of the battery cell 10 where the thermal event has occurred by rupturing the fusing portion formed at the bus bar.

That is, by rapid rupture of the fusing portion, when a thermal event occurs in one battery cell, chain ignition toward other battery cells where no thermal event has occurred may be prevented.

For example, the first portion 810 and the second portion 820 may be made of different materials by double injection molding or insert molding. However, the molding method of the first portion 810 and the second portion 820 made of different materials is not limited thereto.

In a modified embodiment, the first portion 810 may be coated with a material having a heat transfer property. If the first portion 810 is coated with a material having a heat transfer property in this way, the heat generated by a thermal event is transferred more quickly through the first portion 810 as described above, and thus the first portion 810 may be melted relatively easily.

In another modified embodiment, the first portion 810 may be made of a material having a lower melting point than the second portion 820. If the first portion 810 is made of a material having a lower melting point than the second portion 820 as above, the first portion 810 melts more easily when a thermal event occurs, thereby allowing a high current to easily flow to the bus bar through the first portion 810. In addition, as described above, by rupturing the fusing portion formed at the bus bar, the current flow of the battery cell 10 in which the thermal event occurs may be quickly cut off.

That is, when a thermal event occurs, the first portion 810 may be configured to melt before the second portion 820 to induce electrical contact between the cell terminal 400 and the battery can 200.

Referring to FIGS. 7 to 10, a stepped protrusion 410 may be formed in the cell terminal 400, and the stepped protrusion 410 may be coupled to the stepped groove portion 812. That is, the stepped protrusion 410 formed in the cell terminal 400 is coupled so as to be in close contact with the stepped groove portion 812 formed in the rivet gasket 800.

Here, the stepped protrusion 410 may be made of a material having a heat transfer property. If the stepped protrusion 410 is made of a material having a heat transfer property, similarly to the first portion 810 of the aforementioned rivet gasket 800 being made of a material having a heat transfer property, when a thermal event occurs in the battery cell 10, the heat generated by the thermal event is transferred more quickly through the stepped protrusion 410, and accordingly, the stepped groove portion 812 coupled to the stepped protrusion 410 may be easily melted.

In addition, if the stepped groove portion 812 is melted, a high current easily flows to the bus bar through the stepped groove portion 812, and the current flow of the battery cell 10 is quickly cut off where a thermal event occurs by rupturing the fusing portion formed in the bus bar, similar to the above description.

In a modified embodiment, the stepped protrusion 410 may be coated with a material having a heat transfer property. If the stepped protrusion 410 is coated with a material having a heat transfer property, the heat generated by a thermal event is transferred more quickly through the stepped protrusion 410, and thus the stepped groove portion 812 coupled to the stepped protrusion 410 may be easily melted.

If the stepped groove portion 812 is formed in the rivet gasket 800 in this way, since the thickness of the stepped groove portion 812, which is the thickness reduction portion 811, is thinner than the thickness of other parts of the rivet gasket 800, that is, for example, since the thickness of the first portion 810 is thinner than the thickness of the second portion 820, the stepped groove portion 812 of the rivet gasket 800 may be completely melted when a thermal event occurs in any one of the battery cells 10.

Here, if the rivet gasket 800 is completely melted, the battery can 200 and the cell terminal 400 may come into contact over a large area, and as a short circuit occurs, the fusing portion of the bus bar is ruptured.

In more detail, in the past, when a plurality of battery cells are connected in series or parallel through a bus bar, if a thermal event occurs in one battery cell, current may continue to flow to other battery cells where the thermal event does not occur, and in this case, even battery cells that do not have a problem because the thermal event does not occur may cause a chain reaction of fire.

However, since the battery cell 10 according to an embodiment of the present disclosure has a thickness reduction portion 811 formed in the rivet gasket 800, when a thermal event occurs in any one of the battery cells 10, the rivet gasket 800 may be quickly and completely melted as described above.

In addition, in this way, if the rivet gasket 800 is completely melted, the battery can 200 of the negative electrode and the cell terminal 400 of the positive electrode come into contact, and here, since the rivet gasket 800 that is blocking the battery can 200 and the cell terminal 400 is completely removed, a large-area contact becomes possible between the battery can 200 and the cell terminal 400.

Also, if the battery can 200 and the cell terminal 400 of the battery cell 10, where a thermal event occurs, are able to make large-area contact, as a short circuit occurs, a high current flows toward the bus bar, and the high current flowing toward the bus bar ruptures the fusing portion formed in the bus bar.

That is, if the high current from the battery cell 10 where a thermal event occurs physically disconnects the bus bar, the current flow to other battery cells 10 where a thermal event do not occur is blocked, which not only protects other battery cells 10 but also has the effect of preventing chain fire.

That is, in a normal situation where the battery cell 10 is operating normally, a short circuit of the battery cell 10 must be prevented. However, in a situation where a thermal event occurs in one of the battery cells 10, it is advantageous to protect other battery cells 10 by configuring the battery can 200 and cell terminal 400 to make a large-area contact to generate a high current to cut the fusing portion of the bus bar, rather than recovering the battery cell 10 damaged by the thermal event.

FIG. 11 is a perspective cross-sectional view showing a rivet gasket according to a modified embodiment for FIG. 6.

Referring to FIG. 11, a plurality of microgrooves 815 may be formed in the first portion 810. That is, the plurality of microgrooves 815 may be formed in the stepped groove portion 812.

If a plurality of microgrooves 815 are formed in the stepped groove portion 812 in this way, the stepped groove portion 812 may be more easily ruptured when a thermal event occurs.

That is, as the plurality of microgrooves 815 act as stress concentration or melting weakening areas during the process of melting the stepped groove portion 812, the entire stepped groove portion 812 is rapidly ruptured, and as a result, a wide area of electrical contact is formed between the positive electrode cell terminal 400 and the negative electrode battery can 200, thereby allowing high current to flow to the bus bar.

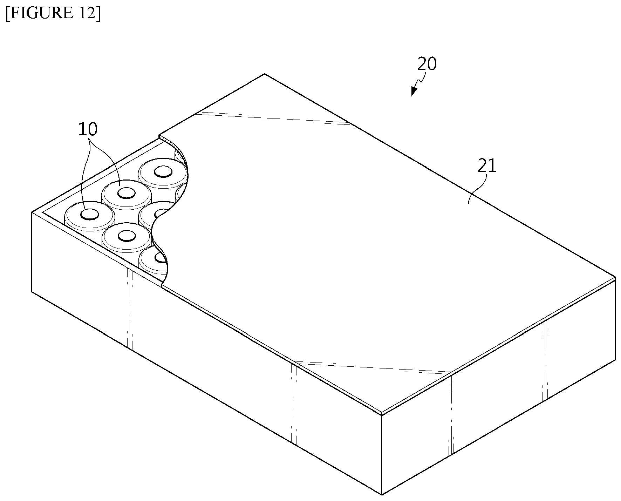

FIG. 12 is a schematic diagram showing the configuration of a battery pack including the battery cell according to each embodiment of the present disclosure.

Referring to FIG. 12, a battery pack 20 according to an embodiment of the present disclosure may include one or more battery cells 10 according to each embodiment of the present disclosure described above. In addition, the battery pack 20 may further include a pack case 21 for storing the battery cells 10 and various devices for controlling the charging and discharging of the battery cells 10, such as a BMS, a current sensor, and a fuse.

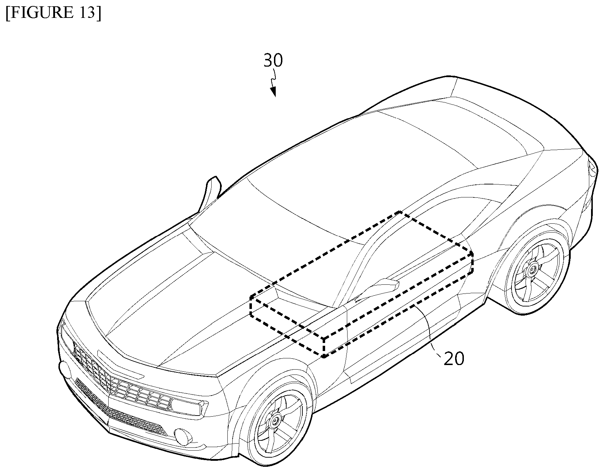

FIG. 13 is a diagram for illustrating a vehicle including the battery pack according to each embodiment of the present disclosure.

Referring to FIG. 13, a vehicle 30 according to an embodiment of the present disclosure may include one or more battery cells 10 according to each embodiment described above or one or more battery packs 20 according to each embodiment described above. Here, the vehicle 30 includes various vehicles, such as an electric vehicle or a hybrid vehicle, designed to use electricity.

Although terms indicating directions such as upper, lower, left, right, front, and rear directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the foregoing embodiments should be considered in a descriptive sense only and not for purposes of limitation. That is, the true scope of the technical concept of the present disclosure is defined by the claims, and all variations or modifications equivalent thereto should be interpreted as being included within the scope of the present disclosure.

### INDUSTRIAL APPLICABILITY

The present disclosure relates to a battery cell, and a battery pack and a vehicle including the same, and is particularly applicable to industries related to secondary batteries.

## Claims

1. A battery cell comprising:
an electrode assembly having a structure in which a positive electrode plate, a negative electrode plate, and a separator interposed between the positive and negative electrode plates are wound in one direction;
a battery can configured to accommodate the electrode assembly;
a cell terminal electrically connected to the positive electrode plate; and
a rivet gasket interposed between the cell terminal and the battery can,
wherein the rivet gasket has a thickness reduction portion formed therein.

2. The battery cell according to claim 1,
wherein the thickness reduction portion is formed as a stepped groove portion.

3. The battery cell according to claim 1,
wherein the thickness reduction portion is formed on an inner side of a contact surface between the rivet gasket and the cell terminal.

4. The battery cell according to claim 1,
wherein the rivet gasket includes:
a first portion in which the thickness reduction portion is formed; and
a second portion extending from the first portion.

5. The battery cell according to claim 4,
wherein the first portion and the second portion are made of different materials.

6. The battery cell according to claim 5,
wherein the first portion is made of a material with a higher thermal conductivity than the second portion.

7. The battery cell according to claim 4,
wherein the first portion is coated with a material having a heat transfer property.

8. The battery cell according to claim 4,
wherein the first portion is made of a material with a lower melting point than the second portion.

9. The battery cell according to claim 8,
wherein when a thermal event occurs, the first portion melts before the second portion, inducing an electrical contact between the cell terminal and the battery can.

10. The battery cell according to claim 2,
wherein a stepped protrusion is formed at the cell terminal, and
wherein the stepped protrusion is coupled to the stepped groove portion.

11. The battery cell according to claim 10,
wherein the stepped protrusion is made of a material having a heat transfer property.

12. The battery cell according to claim 10,
wherein the stepped protrusion is coated with a material having a heat transfer property.

13. The battery cell according to claim 2,
wherein a plurality of microgrooves are formed in the stepped groove portion.

14. A battery pack comprising at least one battery cell according to any one of claims 1 to 13.

15. A vehicle comprising at least one battery cell according to any one of claims 1 to 13.
